# EUROPEAN PATENT APPLICATION

(11) **EP 4 786 556 A1**
(43) Date of publication of application: **05.08.2026**
(21) Application number: 25382053.4
(22) Date of filing: 29.01.2025
(51) Int. Cl.: C09J 7/29, B32B 27/08, B32B 27/32

(54) **SURFACE PROTECTIVE ARTICLES**

(71) Applicant: Dow Global Technologies LLC, Midland, MI 48674 (US)
(72) Inventor: BARRETTO, Abraham, 43006 Tarragona (ES); SAHU, Nrusingh, 43006 Tarragona (ES); SOLARI, Sergio Ariel, 43006 Tarragona (ES)
(74) Representative: Elzaburu S.L.P.

(57) **Abstract**

Embodiments are directed towards surface protective articles including a cast machine direction oriented multilayer polyethylene carrier and an adhesive composition.

## Description

### Field of Disclosure

Embodiments of the present disclosure are directed towards surface protective articles.

### Background

Films can be used for protection of various surfaces. Sensitive surfaces like glass, lacquers, or plastic can be protected with self-adhesive surface protection films. These surface protection films have a number of properties, such as being flexible and able to conform to the surface contour, adhering to the surface sufficiently to prevent a premature loosening, being easy to remove without residue once the protection is no longer desired, and being inert towards the surface. There remains a need for articles that can provide one or more advantageous properties.

### Summary

The present disclosure provides various embodiments, including, without limitation, the following.

A surface protective article including: a cast machine direction oriented multilayer polyethylene carrier including: a first outer layer including a first outer layer high melt index high-density polyethylene and a first outer layer low melt index high-density polyethylene or a first outer layer metallocene linear low-density polyethylene; a core layer including a core layer medium-density polyethylene and a core layer metallocene linear low-density polyethylene; and a second outer layer including a second outer layer high melt index high-density polyethylene and a second outer layer low melt index high density polyethylene or a second outer layer linear low-density polyethylene; and an adhesive coating including: a pressure sensitive adhesive; and a crosslinker.

### Detailed Description

The present disclosure is directed toward surface protective articles. The surface protective articles disclosed herein a multilayer polyethylene carrier having an adhesive coating. Embodiments provide that the multilayer polyethylene carrier is a cast machine direction oriented multilayer polyethylene carrier and that the adhesive coating includes a pressure sensitive adhesive and a crosslinker. Advantageously, the surface protective articles, as disclosed herein, can provide combination of desirable properties, as discussed further herein.

Previous surface protection films have utilized acrylic adhesives. However, these acrylic adhesives migrate to the substrate being protected, particularly when high temperature conditions are utilized. This migration resulting in ghosting. Ghosting refers to the residual marks and/or outlines that remain on the substrate being protected after the protective film has been removed. Ghosting can appear as hazy, cloudy, and/or discolored areas and are undesirable for a number of applications.

Additionally, previous surface protection films have utilized LDPE carriers. However, these surface protection films utilizing LDPE carriers fail to provide high temperature performance.

Advantageously, the surface protective articles can be utilized in high temperature applications and then be removed without observed ghosting.

As mentioned, embodiments provide that the surface protective articles disclosed herein include a multilayer polyethylene carrier, i.e., a cast machine direction oriented multilayer polyethylene carrier. Embodiments provide that the multilayer polyethylene carrier includes at least three layers. For instance, the multilayer polyethylene carrier can include: a first outer layer, e.g. an A layer; a core layer (which may be referred to as an inner layer), e.g., a B layer; and a second outer layer, e.g., a C layer. Embodiments provide that the core layer can be formed between the first outer layer and the second outer layer.

One or more embodiments provide that the multilayer polyethylene carrier can include one or more intermediate layers. As used herein, "intermediate layer" refers to a layer that is formed between the core layer and the first outer layer or the second outer layer. For instance, the multilayer polyethylene carrier can sequentially include: a first outer layer (e.g., an A layer); a first intermediate layer; a core layer (e.g., a B layer); a second intermediate layer; and a second outer layer (e.g., a C layer). In other words, the inner layer can be formed adjacent to the first intermediate layer and the second intermediate layer, while the first intermediate layer is formed adjacent to the first outer layer and the second intermediate layer is formed adjacent to the second outer layer.

Embodiments provide that the first outer layer, e.g. an A layer, includes a high melt index linear high-density polyethylene (HDPE), as discussed further herein. Various types of HDPE may be utilized for different applications. One or more embodiments provide that a blend of polyethylenes, e.g., a blend of a HDPEs, may be utilized for the first outer layer of the multilayer carrier.

As used herein "high melt index HDPE" refers to a HDPE having a melt index (I₂) from 1.35 to 1.7 g/10 min. Embodiments provide that the high melt index HDPE has a higher melt index (I₂) compared to a "low melt index HDPE", as discussed further herein. As used herein, "low melt index HDPE" refers to a HDPE having a melt index (I₂) from 1.0 to 1.3 g/10 min.

"Blend of polyethylenes" refers to a composition of two or more polyethylenes; "blend of polyethylenes" does not refer to laminates. Such blends of polyethylenes can be prepared as dry blends, formed in situ, e.g., in a reactor, melt blends, or using other techniques known to those of skill in the art.

As used herein, "polyethylene" incudes various polyethylene polymers, such as high-density polyethylene (HDPE), linear low-density polyethylene (LLDPE), ultra low-density polyethylene (ULDPE), medium-density polyethylene (MDPE), and low-density polyethylene (LDPE), among others. The term "polymer" refers to a polymeric compound prepared by polymerizing monomers, whether of a same or a different type. The generic term polymer thus embraces the term "homopolymer," which refers to a polymer prepared from only one type of monomer as well as "copolymer," which refers to a polymer prepared from two or more different monomers.

"Polyethylene" e.g., polyethylene polymers, refers to polymers comprising greater than 50% by mole of units derived from ethylene monomer.

Embodiments provide that from 55 to 100 wt% of the polyethylene is derived from ethylene monomers, based on a total weight of the polyethylene. All individual values and subranges from 55 to 100 wt% are included; for example, the polyethylene can have from a lower limit of 55, 60, 70, or 75 wt% of units derived ethylene monomers to an upper limit of 100, 99.9, 97, 95, 90, 85, or 80 wt% of units derived ethylene monomers based upon the total weight of the polyethylene.

One or more embodiments provide that from 0.1 to 45 wt% of polyethylene is derived from comonomers, when a comonomer is utilized, based on a total weight of the polyethylene. One or more embodiments provide that the comonomer is an alpha olefin comonomer. All individual values and subranges from 0.1 to 45 wt% are included; for example, the polyethylene can have from a lower limit of 0.1, 3, 5, 10, 15, or 20 wt% of units derived from comonomer to an upper limit of 45, 40, 30, or 25 wt% of units derived from comonomer based upon the total weight of the polyethylene.

Embodiments provide that the high melt index HDPE can have a melt index (I₂) from 1.35 to 1.7 g/10 min. All individual values and subranges from 1.35 to 1.7 g/10 min are included; for example, the high melt index HDPE can have a melt index from a lower limit of 1.35 or 1.4 g/10 to an upper limit of 1.7, 1.65, or 1.6 g/10. Melt index (I₂) can be determined according to ASTM D1238.

Embodiments provide that the high melt index HDPE can have a density from 0.93 to 0.97 g/cm³. All individual values and subranges from 0.93 to 0.97 g/cm³ are included; for example, the high melt index HDPE can have a melt index from a lower limit of 0.93 or 0.94 g/cm³ to an upper limit of 0.97 or 0.96 g/cm³. Density can be determined according to ASTM D 792.

Embodiments provide that the high melt index HDPE, can be from 60 to 95 wt% of the first outer layer of the multilayer carrier, based a total weight of polyethylene of the first outer layer. All individual values and subranges from 60 to 95 wt% are included; for example, the high melt index HDPE can be from a lower limit of 60, 70, or 75 wt% to an upper limit of 95, 95, or 85 wt% of the first outer layer of the multilayer carrier, based the total weight of polyethylene of the first outer layer.

Embodiments of the present disclosure provide that the high melt index HDPE can be made by a number of processes, e.g. with conventional reaction components, reaction conditions, reaction times, and isolation procedures, utilized for making known high melt index HDPEs. Embodiments of the present disclosure provide that the high melt index HDPE can be obtained commercially. An example of a commercially available high melt index HDPE is DOWLEX 2750ST, from The Dow Chemical Company, among other high melt index HDPEs.

One or more embodiments provide that the first outer layer includes a low melt index high-density polyethylene (HDPE). Various types of HDPE may be utilized for different applications. One or more embodiments provide that a blend of polyethylenes, e.g., a blend of HDPEs, may be utilized for the first outer layer of the multilayer carrier.

Embodiments provide that the low melt index HDPE can have a melt index (I₂) from 1.0 to 1.3 g/10 min. All individual values and subranges from 1.0 to 1.3 g/10 min are included; for example, the low melt index HDPE can have a melt index from a lower limit of 1.0 or 1.1 g/10 min to an upper limit of 1.3 or 1.25 g/10 min.

Embodiments provide that the low melt index HDPE can have a density from 0.940 to 0.990 g/cm³. All individual values and subranges from 0.940 to 0.990 g/cm³ are included; for example, the low melt index HDPE can have a melt index from a lower limit of 0.940, 0.945, 0.955, or 0.960 g/cm³ to an upper limit of 0.990, 0.980 or 0.970 g/cm³.

Embodiments of the present disclosure provide that the low melt index HDPE can be made by a number of processes, e.g. with conventional reaction components, reaction conditions, reaction times, and isolation procedures, utilized for making known low melt index HDPEs. Embodiments of the present disclosure provide that the low melt index HDPE can be obtained commercially. An example of a commercially available low melt index HDPE is ELITE AT 6900, from The Dow Chemical Company, among other low melt index HDPEs.

Embodiments provide that the low melt index HDPE can be from 5 to 40 wt% of the first outer layer of the multilayer carrier, based on a total weight of polyethylene of the first outer layer. All individual values and subranges from 5 to 40 wt% are included; for example, the low melt index HDPE can be from a lower limit of 5, 10, or 15 wt% to an upper limit of 40, 30, or 25 wt% of the first outer layer of the multilayer carrier, based the total weight of polyethylene of the first outer layer.

One or more embodiments provide that the that the first outer layer includes a metallocene linear low-density polyethylene (mLLDPE). Various types of mLLDPE may be utilized for different applications. One or more embodiments provide that a blend of polyethylenes, e.g., a blend of mLLDPE, may be utilized for the first outer layer of the multilayer carrier.

Embodiments provide that the mLLDPE can have a melt index (I₂) from 3.0 to 5.0 g/10 min. All individual values and subranges from 3.0 to 5.0 g/10 min are included; for example, the mLLDPE can have a melt index from a lower limit of 3.0 or 3.5 g/10 to an upper limit of 5.0 or 4.5 g/10.

Embodiments provide that the mLLDPE can have a density from 0.900 to 0.930 g/cm³. All individual values and subranges from 0.900 to 0.930 g/cm³ are included; for example, the mLLDPE can have a melt index from a lower limit of 0.900, 0.905, or 0.910 g/cm³ to an upper limit of 0.930, 0.925 or 0.920 g/cm³.

Embodiments of the present disclosure provide that the mLLDPE can be made by a number of processes, e.g. with conventional reaction components, reaction conditions, reaction times, and isolation procedures, utilized for making known mLLDPEs. Embodiments of the present disclosure provide that the mLLDPE can be obtained commercially. An example of a commercially available mLLDPE is ELITE 5230 GC, from The Dow Chemical Company, among other mLLDPEs.

Embodiments provide that the mLLDPE can be from 5 to 40 wt% of the first outer layer of the multilayer carrier, based on a total weight of polyethylene of the first outer layer. All individual values and subranges from 5 to 40 wt% are included; for example, the mLLDPE can be from a lower limit of 5, 10, or 15 wt% to an upper limit of 40, 30, or 25 wt% of the first outer layer of the multilayer carrier, based the total weight of polyethylene of the first outer layer.

Embodiments provide that the MDPE can have a melt index (I₂) from 0.6 to 1.0 g/10 min. All individual values and subranges from 0.6 to 1.0 g/10 min are included; for example, the MDPE can have a melt index from a lower limit of 0.6 or 0.7 g/10 to an upper limit of 1.0 or 0.9 g/10.

Embodiments provide that the MDPE can have a density from 0.930 to 0.950 g/cm³. All individual values and subranges from 0.930 to 0.950 g/cm³ are included; for example, the MDPE can have a melt index from a lower limit of 0.930, 0.935, or 0.938 g/cm³ to an upper limit of 0.950, 0.945 or 0.943 g/cm³.

Embodiments of the present disclosure provide that the MDPE can be made by a number of processes, e.g. with conventional reaction components, reaction conditions, reaction times, and isolation procedures, utilized for making known MDPEs. Embodiments of the present disclosure provide that the MDPE can be obtained commercially. An example of a commercially available MDPE is ELITE 5940ST, from The Dow Chemical Company, among other MDPEs.

Embodiments provide that the MDPE can be from 55 to 85 wt% of the core layer of the multilayer carrier, based on a total weight of polyethylene of the core layer. All individual values and subranges from 55 to 85 wt% are included; for example, the MDPE can be from a lower limit of 55, 60, or 65 wt% to an upper limit of 85, 80, or 75 wt% of the core layer of the multilayer carrier, based the total weight of polyethylene of the core layer.

One or more embodiments provide that the core layer, e.g., a B layer, includes a LLDPE, as discussed herein. Various types of LLDPE may be utilized for different applications. One or more embodiments provide that a blend of polyethylenes, e.g., a blend of LLDPEs, may be utilized for the core layer of the multilayer carrier.

Embodiments provide that the LLDPE has a melt index (I₂) from 0.8 to 1.2 g/10 min. All individual values and subranges from 0.8 to 1.2 g/10 min are included; for example, the LLDPE can have a melt index from a lower limit of 0.8 or 0.9 g/10 min to an upper limit of 1.2 or 1.1 g/10 min.

Embodiments provide that the LLDPE can have a density from 0.900 to 0.932 g/cm³. All individual values and subranges from 0.900 to 0.932 g/cm³ are included; for example, the LLDPE can have a melt index from a lower limit of 0.900, 0.905, or 0.910 g/cm³ to an upper limit of 0.932, 0.927, or 0.922 g/cm³.

Embodiments of the present disclosure provide that the LLDPE can be made by a number of processes, e.g. with conventional reaction components, reaction conditions, reaction times, and isolation procedures, utilized for making known LLDPEs. Embodiments of the present disclosure provide that the LLDPE can be obtained commercially. An example of a commercially available LLDPE is ELITE 5400 G, from The Dow Chemical Company, among other LLDPEs.

Embodiments provide that the LLDPE can be from 5 to 40 wt% of the core layer of the multilayer carrier, based on a total weight of polyethylene of the core layer. All individual values and subranges from 5 to 40 wt% are included; for example, the LLDPE can be from a lower limit of 5, 10, or 15 wt% to an upper limit of 40, 30, or 25 wt% of the core layer of the multilayer carrier, based the total weight of polyethylene of the core layer.

One or more embodiments provide that the core layer includes a mLLDPE, as discussed herein. Various types of mLLDPE may be utilized for different applications. One or more embodiments provide that a blend of polyethylenes, e.g., a blend of mLLDPEs, may be utilized for the core layer of the multilayer carrier.

Embodiments provide that the mLLDPE can be from 5 to 40 wt% of the core layer of the multilayer carrier, based a total weight of polyethylene of the core layer. All individual values and subranges from 5 to 40 wt% are included; for example, the mLLDPE can be from a lower limit of 5, 10, or 15 wt% to an upper limit of 40, 30, or 25 wt% of the core layer of the multilayer carrier, based the total weight of polyethylene of the core layer.

Embodiments provide that the second outer layer, e.g. a C layer, includes a high melt index HDPE, as discussed herein. Embodiments provide that the high melt index HDPE, can be from 60 to 95 wt% of the second outer layer of the multilayer carrier, based a total weight of polyethylene of the second outer layer. All individual values and subranges from 60 to 95 wt% are included; for example, the high melt index HDPE can be from a lower limit of 60, 70, or 75 wt% to an upper limit of 95, 95, or 85 wt% of the second outer layer of the multilayer carrier, based the total weight of polyethylene of the second outer layer.

One or more embodiments provide that the second outer layer includes a low melt index HDPE, as discussed herein. Embodiments provide that the low melt index HDPE can be from 5 to 40 wt% of the second outer layer of the multilayer carrier, based on a total weight of polyethylene of the second outer layer. All individual values and subranges from 5 to 40 wt% are included; for example, the low melt index HDPE can be from a lower limit of 5, 10, or 15 wt% to an upper limit of 40, 30, or 25 wt% of the second outer layer of the multilayer carrier, based the total weight of polyethylene of the second outer layer.

One or more embodiments provide that the second outer layer includes a mLLDPE, as discussed herein. Embodiments provide that the mLLDPE can be from 5 to 40 wt% of the second outer layer of the multilayer carrier, based a total weight of polyethylene of the second outer layer. All individual values and subranges from 5 to 40 wt% are included; for example, the mLLDPE can be from a lower limit of 5, 10, or 15 wt% to an upper limit of 40, 30, or 25 wt% of the second outer layer of the multilayer carrier, based the total weight of polyethylene of the second outer layer.

One or more embodiments provide that the second outer layer includes a LLDPE, as discussed herein. Embodiments provide that the LLDPE can be from 5 to 40 wt% of the second outer layer of the multilayer carrier, based a total weight of polyethylene of the second outer layer. All individual values and subranges from 5 to 40 wt% are included; for example, the LLDPE can be from a lower limit of 5, 10, or 15 wt% to an upper limit of 40, 30, or 25 wt% of the second outer layer of the multilayer carrier, based the total weight of polyethylene of the second outer layer.

As mentioned, one or more embodiments provide that the multilayer polyethylene carrier can include one or more intermediate layers.

One or more embodiments provide that the one more intermediate layers include a high melt index HDPE, as discussed herein. Embodiments provide that the high melt index HDPE, can be from 60 to 95 wt% of a respective intermediate layer of the multilayer carrier, based a total weight of polyethylene of the respective intermediate layer. All individual values and subranges from 60 to 95 wt% are included; for example, the high melt index HDPE can be from a lower limit of 60, 70, or 75 wt% to an upper limit of 95, 95, or 85 wt% of the respective intermediate layer of the multilayer carrier, based the total weight of polyethylene of the respective intermediate layer.

One or more embodiments provide that the one more intermediate layers include a low melt index HDPE, as discussed herein. Embodiments provide that the low melt index HDPE can be from 5 to 40 wt% of a respective intermediate layer of the multilayer carrier, based on a total weight of polyethylene of the respective intermediate layer. All individual values and subranges from 5 to 40 wt% are included; for example, the low melt index HDPE can be from a lower limit of 5, 10, or 15 wt% to an upper limit of 40, 30, or 25 wt% of the respective intermediate layer of the multilayer carrier, based the total weight of polyethylene of the respective intermediate layer.

One or more embodiments provide that the one more intermediate layers include a mLLDPE, as discussed herein. Embodiments provide that the mLLDPE can be from 5 to 40 wt% of a respective intermediate layer of the multilayer carrier, based on a total weight of polyethylene of the respective intermediate layer. All individual values and subranges from 5 to 40 wt% are included; for example, the mLLDPE can be from a lower limit of 5, 10, or 15 wt% to an upper limit of 40, 30, or 25 wt% of the respective intermediate layer of the multilayer carrier, based the total weight of polyethylene of the respective intermediate layer.

One or more embodiments provide that the one more intermediate layers include a LLDPE, as discussed herein. Embodiments provide that the LLDPE can be from 5 to 40 wt% of a respective intermediate layer of the multilayer carrier, based on a total weight of polyethylene of the respective intermediate layer. All individual values and subranges from 5 to 40 wt% are included; for example, the LLDPE can be from a lower limit of 5, 10, or 15 wt% to an upper limit of 40, 30, or 25 wt% of the respective intermediate layer of the multilayer carrier, based the total weight of polyethylene of the respective intermediate layer.

Embodiments provide that the multilayer polyethylene carrier is made utilizing a cast extrusion process. In other words, the multilayer polyethylene carrier can be referred to as a cast film. The multilayer polyethylene carrier can be a coextruded multilayer cast film, e.g., an A/B/C layered article and may include a number of intermediate layers, as discussed herein. The multilayer polyethylene carrier can be made utilizing known cast equipment, conditions, and components, and such.

Embodiments provide that the first outer layer of the multilayer polyethylene carrier can have a thickness, e.g., a cast extrusion thickness, from 5 to 25 micrometers (µm). All individual values and subranges from 5 to 25 µm are included; for example, the first outer layer can have a thickness from a lower limit of 5, 8, 10, or 12 µm to an upper limit of 25, 20, 18, or 16 µm. One or more embodiments provide that the first outer layer of the multilayer polyethylene carrier can have a thickness of 12 to 16 µm.

Embodiments provide that the inner layer of the multilayer polyethylene carrier can have a thickness, e.g., a cast extrusion thickness, from 5 to 25 µm. All individual values and subranges from 5 to 25 µm are included; for example, the inner layer can have a thickness from a lower limit of 5, 6, 8, or 10 µm to an upper limit of 25, 20, 18, 16, or 14 µm. One or more embodiments provide that the inner layer of the multilayer polyethylene carrier can have a thickness of 10 to 14 µm.

Embodiments provide that the second outer layer of the multilayer polyethylene carrier can have a thickness, e.g., a cast extrusion thickness, from 5 to 35 µm. All individual values and subranges from 5 to 35 µm are included; for example, the second outer layer can have a thickness from a lower limit of 5, 10, 15, or 20 µm to an upper limit of 35, 30, or 25 µm. One or more embodiments provide that the second outer layer of the multilayer polyethylene carrier can have a thickness of 20 to 25 µm.

Embodiments provide that a respective intermediate layer can have a thickness, e.g., a cast extrusion thickness, from 1 to 25 µm. All individual values and subranges from 1 to 25 µm are included; for example, a respective intermediate layer can have a thickness from a lower limit of 1, 3, 5, 8, or 10 µm to an upper limit of 25, 20, or 18 µm.

Embodiments provide that the multilayer polyethylene carrier is machine direction oriented (MDO). One or more embodiments provide that the multilayer polyethylene carrier is stretched in the machine direction (MD). One or more embodiments provide that the multilayer polyethylene carrier may be machine direction oriented stretched at a stretch ratio of 1:2, 1:3, 1:4, 1:5, 1:6, 1:7, 1:7.5, or 1:8. The multilayer polyethylene carrier may be stretched to provide machine direction orientation. The multilayer polyethylene carrier can be machine direction-oriented utilizing known equipment, conditions, and components, and such.

Embodiments provide that the multilayer polyethylene carrier is corona treated. One or more embodiments provide that the multilayer polyethylene carrier is corona treated subsequently to being stretched to provide machine direction orientation. Corona treatment is a well-known process. Corona treatment is a surface modification technique used to improve the surface energy of the substrate using high voltage. The multilayer polyethylene carrier can be corona treated utilizing known equipment, conditions, and components, and such. The corona can include providing ionized gas, e.g., air, to a surface of the multilayer polyethylene carrier for a desired time period. Please add any desired details regarding the corona treatment.

One or more embodiments provide that the second outer layer, the C layer, is corona treated. One or more embodiments provide that the first outer layer, the A layer, is corona treated. Corona treating the second outer layer can prepare the second outer layer to have the adhesive coating applied thereto. One or more embodiments provide that both the first outer layer, the A layer, and the second outer layer are corona treated.

As mentioned, embodiments provide that the surface protective articles disclosed herein include a multilayer polyethylene carrier having an adhesive coating. The adhesive coating includes a pressure sensitive adhesive and a crosslinker.

Embodiments provide that the pressure sensitive adhesive is a water-based pressure sensitive adhesive. Embodiments provide that the water-based pressure sensitive adhesive is an acrylic emulsion. "Acrylic emulsion" refers to a water-based suspension of acrylic polymer particles.

As used herein, "acrylic", includes (meth)acrylic acid, (meth)alkyl acrylate, (meth)acrylamide, (meth)acrylonitrile and their modified forms such as (meth)hydroxyalkyl acrylate.

The acrylic polymer particles can include monomeric structural units derived from one or more ethylenically unsaturated monomers. Examples of ethylenically unsaturated monomers include, but are not limited to, (meth)acrylic ester monomers such as methyl acrylate, ethyl acrylate, butyl acrylate, 2-ethylhexyl acrylate, nonyl acrylate, decyl acrylate, lauryl acrylate, hydroxyethyl acrylate, hydroxypropyl acrylate, methyl methacrylate, ethyl methacrylate, butyl methacrylate, nonyl methacrylate, isodecyl methacrylate, lauryl methacrylate, hydroxyethyl methacrylate, hydroxypropyl methacrylate, and combinations thereof.

The water-based pressure sensitive adhesive, e.g., an acrylic emulsion, may have a solids content, e.g. the acrylic polymer particles, from 40 to 75 weight percent, based upon a total weight of the water-based pressure sensitive adhesive. All individual values and subranges from 40 to 75 weight percent are included; for example, the water-based pressure sensitive adhesive may have a solids content from a lower limit of 40, 45, or 50 weight percent to an upper limit of 75, 65, or 60 weight percent, based upon the total weight of the water-based pressure sensitive adhesive.

The water-based pressure sensitive adhesive can be made using known equipment, reaction components, and reaction conditions. For example, the water-based pressure sensitive can be formed by emulsion polymerization.

The water-based pressure sensitive adhesive can be obtained commercially. An example of a commercial water-based pressure sensitive is ROBOND N-1031D from The Dow Chemical Company, among other commercially available water-based pressure sensitive adhesives.

As mentioned, embodiments provide that the adhesive coating includes a crosslinker. The crosslinker can be poly(hexamethylene diisocyanate). The crosslinker can be a water-based poly(hexamethylene diisocyanate) dispersion.

Embodiments provide that the crosslinker has an NCO % (by weight) from 10 to 35%. All individual values and subranges from 10 to 35% are included; for example, the crosslinker can have an NCO % from a lower limit of 10, 12, or 16% to an upper limit of 35, 30, or 28%. NCO% can be determined by ASTM D5155.

Embodiments provide that the crosslinker has a monomeric HDI content of less than 0.15 percent by weight. For instance, the crosslinker can have a monomeric HDI content from 0.01 to 0.14 percent by weight.

Embodiments provide that the crosslinker has a density from 0.75 to 1.35 g/ml. All individual values and subranges from 0.75 to 1.35 g/ml are included; for example, the crosslinker can have a density from a lower limit of 0.75, 0.9, or 1.1 to an upper limit of 1.35, 1.30, or 1.20 g/ml. Density can be determined by DIN 51757.

The crosslinker can be made using known equipment, reaction components, and reaction conditions. The crosslinker be obtained commercially. An example of a commercial crosslinker is BAYHYDUR 304 from Covestro, among other commercially available crosslinkers.

The adhesive coating can include from 1 to 5 parts by weight of crosslinker solids based upon 100 parts by weight of pressure sensitive adhesive. All individual values and subranges from 1 to 5 parts by weight are included; for example, the adhesive coating can include the crosslinker from a lower limit of 1, 1.5, 2 or 2.5 to an upper limit of 5, 4.5, 4, or 3.4 parts by weight based upon 100 parts by weigh of the pressure sensitive adhesive.

The adhesive coating can be made using known equipment, components, and conditions. For example, the adhesive coating can be made by mixing the pressure sensitive adhesive and the crosslinker.

Embodiments provide that the adhesive coating is applied to the multilayer polyethylene carrier subsequently to machine direction orientation and corona treatment of the multilayer polyethylene carrier to make the surface protective articles. Embodiments provide that the adhesive coating is applied to a corona treated portion of the multilayer polyethylene carrier.

The adhesive coating can be applied to the multilayer polyethylene carrier using known equipment, components, and conditions to make the surface protective articles. For example, the adhesive coating can be applied utilizing a Mayer bar.

After the adhesive coating is applied to the multilayer polyethylene carrier, the surface protective article can be dried. The surface protective articles can be dried using known equipment, components, and conditions. Different drying temperatures and/or drying times may be utilized for various applications.

The adhesive coating can be applied to the multilayer polyethylene carrier to provide a dry coat weight from 3.5 to 6.5 g/m². All individual values and subranges from 3.5 to 6.5 g/m² are included; for example, the adhesive coating can be applied to provide a dry coat weight from a lower limit of 3.5, 4.0, or 4.5 to an upper limit of 6.5, 6.5, or 5.5 g/m².

Advantageously, the surface protective articles can provide a number of desirable properties.

As mentioned, advantageously, the surface protective articles can be utilized in high temperature applications and then be removed without observed ghosting. Embodiments provide that such high temperature applications include a substrate, e.g., a polycarbonate or polymethylmethacrylate sheet, having the surface protective article applied thereto being subjected to a temperature of approximately 100 °C, e.g., 95 °C to 105 °C, for approximately 24 hours, e.g., 20 to 28 hours. Following the substrate having the surface protective article applied thereto being subjected to a temperature of approximately 100 °C for approximately 24 hours, the surface protective article can be removed without visually observed ghosting.

The surface protective articles can provide that a bond is maintained between the multilayer polyethylene carrier and adhesive coating after being subjected to a temperature of approximately 100 °C for approximately 24 hours. Bond maintenance can indicate integrity of the surface protective article, which is desirable for a number of applications.

The surface protective articles can provide a peel adhesion on polycarbonate that is equal to or greater than 3.5 N/inch. For instance, the surface protective articles can provide a peel adhesion on polycarbonate from 3.5 to 7.0 N/inch after being subjected to a temperature of approximately 100 °C for approximately 24 hours. All values and subranges from 33.5 to 7.0 N/inch are included; for example, the surface protective article can provide a peel adhesion from a lower limit of 3.5, 4.0, or 4.5 to an upper limit of 7.0 or 6.5 N/inch. Peel adhesion can be determined according to AFERA 5001, Test Method A.

The surface protective articles can provide a constant peel force over time and/or distance during a peel test, e.g., AFERA 5001, Test Method A. A constant peel force indicates that the force required to peel the surface protective article off the substrate, e.g., a polycarbonate sheet, remains constant throughout the test after being subjected to a temperature of approximately 100 °C for approximately 24 hours. This indicates stable adhesion, where no significant changes in resistance are experienced as the surface protective articles is peeled away. Stable adhesion is desirable for a number of applications. In contrast, a non-constant peel force, which may be associated with an ascending peel force curve can indicate that the force required to peel the adhesive increases progressively over time and/or distance. This could indicate that the adhesive bond strengthens as more of the adhesive is removed, or that the adhesive or substrate is deforming in a way that increases resistance. A non-constant peel force is undesirable for a number of applications.

The surface protective articles can provide no observed film stretching when applied to a substrate, e.g., a polycarbonate sheet, and being subjected to a temperature of approximately 100 °C for approximately 24 hours. Film stretching, like film breakage, is undesirable for a number of applications.

The surface protective articles disclosed herein can be utilized for a number of applications. The surface protective articles can be utilized to protect a substrate, e.g., a polycarbonate or polymethylmethacrylate substrate, in high temperature conditions, e.g. a temperature of approximately 100 °C for approximately 24 hours.

### EXAMPLES

In the Examples, various terms and designations for materials are used including, for instance, the following.

High melt index HDPE (I₂ 1.5 g/10 min; density 0.950 g/cm³; DOWLEX 2750ST obtained from The Dow Chemical Company).

Low melt index HDPE (I₂ 1.2 g/10 min; density 0.969 g/cm³; ELITE AT 6900 obtained from The Dow Chemical Company).

mLLDPE (I₂ 4.0 g/10 min; density 0.916 g/cm³; ELITE 5230 GC obtained from The Dow Chemical Company).

MDPE (I₂ 0.8 g/10 min; density 0.941 g/cm³; ELITE 5940ST obtained from The Dow Chemical Company).

LLDPE (I₂ 1.0 g/10 min; density 0.916 g/cm³; ELITE 5400 G obtained from The Dow Chemical Company).

Pressure sensitive adhesive (acrylic emulsion 53 wt% solids; ROBOND N-1031D obtained from The Dow Chemical Company).

Crosslinker (poly(hexamethylene diisocyanate); BAYHYDUR 304 obtained from Covestro).

Cast multilayer polyethylene carrier 1, as reported in Table 1, was made as follows.

Cast multilayer polyethylene carrier 2 was made as Cast multilayer polyethylene carrier 1 with any changes shown in Table 1.

**Table 1**

| | Cast Multilayer Polyethylene Carrier 1 | Cast Multilayer Polyethylene Carrier 2 |
|---|---|---|
| First Outer Layer | High melt index HDPE | High melt index HDPE |
| | 80 wt% | 80 wt% |
| | Low melt index HDPE | mLLDPE |
| | 20 wt% | 20 wt% |
| First Intermediate layer | High melt index HDPE | High melt index HDPE80 |
| | 80 wt% | wt% |
| | LLDPE | LLDPE |
| | 20 wt% | 20 wt% |
| Core Layer | MDPE | MDPE |
| | 70 wt% | 70 wt% |
| | LLDPE | LLDPE |
| | 30 wt% | 30 wt% |
| Second Intermediate layer | High melt index HDPE | High melt index HDPE |
| | 80 wt% | 80 wt% |
| | LLDPE | LLDPE |
| | 20 wt% | 20 wt% |
| Second Outer Layer | High melt index HDPE | High melt index HDPE |
| | 80 wt% | 80 wt% |
| | Low melt index HDPE | LLDPE |
| | 20 wt% | 20 wt% |

The cast multilayer polyethylene carrier 1 was machine direction oriented as follows. Cast multilayer polyethylene carrier 1 was stretched at 125 °C and stretched 7 times in the machine direction.

Cast multilayer polyethylene carrier 2 was machine direction oriented as was cast multilayer polyethylene carrier 1.

After stretching, the second outer layer of the machine direction oriented cast multilayer polyethylene carrier 1 was corona treated (42 mN/m).

After stretching, the second outer layer of the machine direction oriented cast multilayer polyethylene carrier 2 was corona treated as machine direction oriented cast multilayer polyethylene carrier 1.

An adhesive coating was made as follows. The pressure sensitive adhesive (100 parts by weight) was added to a container and diluted under stirring with deionized water to 25 wt% solids. Crosslinker (3 parts by weight) was slowly added to the contents of the container while stirring to make the adhesive coating.

Peel Adhesion was determined according to AFERA 5001, Test Method A as follows.

Example 1, a surface protective article, was made by applying the adhesive coating to the corona treated side of the cast machine direction oriented multilayer polyethylene carrier 1. The adhesive was applied with a Mayer bar (#3) over the corona treated side of the machine direction oriented multilayer polyethylene carrier to target a dry coat weight of 5 g/m²; then the coated article was dried in a force draft oven at 70 °C for 3 minutes. Then, the coated side of the article was covered by with a polyethylene film and the article was conditioned at approximately 50% relative humidity for 72 hours.

After the 72 hour conditioning, the polyethylene film was removed and the coated side of Example 1 was applied to a polycarbonate test panel (Clear/Flat Polycarbonate testing probes with 3.18 mm thickness; 8.1 cm width and 10.1 cm large; previously cleaned with ethanol and dried in a force draft oven at 100 °C for 4 hours). Then, the polycarbonate test panel having Example 1 applied thereto was placed in a force draft oven at 100 °C for 24 hours. After 24 hours, the polycarbonate test panel having Example 1 applied thereto was transferred to a Peel Adhesion tester (Instron) conditioning chamber (80 °C) and Peel Adhesion (180°) was measured. Failure modes were determined by visual observation. The results are reported in Table 2.

Example 2, a surface protective article, was made as Example 1 with the change that cast machine direction oriented multilayer polyethylene carrier 2 was used rather than cast machine direction oriented multilayer polyethylene carrier 1.

Comparative Example A, was made as Example 1 with the change that a blown machine direction oriented multilayer polyethylene carrier was utilized rather than cast multilayer polyethylene carrier 1.

Comparative Example B, was made as Example 1 with the change that a LDPE carrier (50 µm thickness, DOW LDPE 330E, obtained from The Dow Chemical company) was utilized rather than cast multilayer polyethylene carrier 1.

Comparative Example C was made was made as Example 1 with the change that a LDPE carrier (25 µm thickness, DOW LDPE 330E, obtained from The Dow Chemical company) was utilized rather than cast multilayer polyethylene carrier 1.

**Table 2**

| | Example 1 | Example 2 | Comparative Example A | Comparative Example B | Comparative Example C |
|---|---|---|---|---|---|
| Bond maintained between carrier and adhesive coating | Pass | Pass | Pass | Pass | Pass |
| Peel Adhesion (N/inch) | 5.1 | 5.1 | 5.2 | 3.3 | 2.8 |
| Constant Peel Force observed | Yes | Yes | No | No | - |
| Visual Ghosting Observation | No observed ghosting | No observed ghosting | Observed ghosting | NA | NA |
| Visual Stretching Observation | No observed film stretching | No observed film stretching | No observed film stretching | Observed film stretching and film breakage. | Observed film stretching and film breakage. |

The data of Table 2 show that each of Examples 1-2 maintained a bond between the cast machine direction oriented multilayer polyethylene carrier and the adhesive coating.

The data of Table 2 show that each of Examples 1-2 had a Peel Adhesion (180°) equal to or greater than 4.0 N/inch.

The data of Table 2 show that each of Examples 1-2 were observed to provide a constant peel force.

The data of Table 2 show that each of Examples 1-2 provided no observed ghosting.

The data of Table 2 show that each of Examples 1-2 provided no observed stretching.

## Claims

1. A surface protective article comprising:
a cast machine direction oriented multilayer polyethylene carrier comprising:
a first outer layer including a first outer layer high melt index high density polyethylene and a first outer layer low melt index high-density polyethylene or a first outer layer metallocene linear low-density polyethylene;
a core layer including a core layer medium-density polyethylene and a core layer metallocene linear low-density polyethylene; and
a second outer layer including a second outer layer high melt index high-density polyethylene and a second outer layer low melt index high density polyethylene or a second outer layer linear low-density polyethylene; and
an adhesive coating comprising:
a pressure sensitive adhesive; and
a crosslinker.

2. The surface protective article of claim 1, wherein the pressure sensitive adhesive comprises an acrylic emulsion.

3. The surface protective article of claim 2, wherein the crosslinker comprises poly(hexamethylene diisocyanate).

4. The surface protective article of claim 3, wherein the adhesive coating is from 1 to 5 parts by weight of crosslinker solids based upon 100 parts by weight of pressure sensitive adhesive.

5. The surface protective article of claim 1, comprising a first intermediate layer between the first outer layer and the core layer, and a second intermediate layer between the second outer layer and the core layer.

6. The surface protective article of any one of claims 1-5, wherein the first outer layer high melt index high-density polyethylene is from 60 to 95 wt% of the first outer layer of the multilayer carrier, based a total weight of polyethylene of the first outer layer, the core layer medium-density polyethylene is from 55 to 85 wt% of the core layer of the multilayer carrier, based on a total weight of polyethylene of the core layer, and the second outer layer high melt index high density polyethylene is from 60 to 95 wt% of the second outer layer of the multilayer carrier, based on a total weight of polyethylene of the second outer layer.

7. The surface protective article of any one of claims 1-6, wherein the first outer layer has a thickness from 5 to 25 micrometers, the core layer has a thickness from 5 to 25 micrometers, and the second outer layer has a thickness from 5 to 35 micrometers.

8. The surface protective article of any one of claims 1-7, wherein:
the first outer layer high melt index linear high-density polyethylene has a melt index from 1.35 to 1.7 g/10 min and density from 0.930 to 0.970 g/cm³;
the first outer layer low melt index high-density polyethylene has a melt index from 1.0 to 1.3 g/10 min and density from 0.940 to 0.990 g/cm³;
the first outer layer metallocene linear low-density polyethylene has a melt index from 3.0 to 5.0 g/10 min and density from 0.900 to 0.930 g/cm³;
the core layer medium-density polyethylene has a melt index from 0.6 to 1.0 g/10 min and density from 0.930 to 0.950 g/cm³;
the core layer metallocene linear low-density polyethylene has a melt index from 3.0 to 5.0 g/10 min and density from 0.900 to 0.930 g/cm³;
the second outer layer high melt index high-density polyethylene has a melt index from 1.35 to 1.7 g/10 min and density from 0.930 to 0.970 g/cm³;
the second outer layer low melt index high-density polyethylene has a melt index from 1.0 to 1.3 g/10 min and density from 0.940 to 0.990 g/cm³; and
the second outer layer linear low-density polyethylene has a melt index from 0.8 to 1.2 g/10 min and density from 0.900 to 0.932 g/cm³.

9. The surface protective article of any one of claims 1-8, wherein the second outer layer is corona treated and the adhesive coating is applied to the second outer layer.

10. The surface protective article of any one of claims 1-9, wherein the adhesive coating has a dry coat weight from 3.5 to 6.5 g/m².
